# EUROPÄISCHE PATENTANMELDUNG

(11) **EP 4 091 441 A1**
(43) Veröffentlichungstag der Anmeldung: **23.11.2022**
(21) Anmeldenummer: 22171424.9
(22) Anmeldetag: 03.05.2022
(51) Int. Cl.: A01J 25/16, B65D 19/06

(54) **KÄSEREIFEBEHÄLTER MIT EINSCHUBWAND**

(30) Priorität: 20.05.2021 DE 102021102777
(71) Anmelder: GEBHARDT Logistic Solutions GmbH, 93413 Cham (DE)
(72) Erfinder: Lesch, Franz, 93413 Cham (DE)
(74) Vertreter: Barth, Michael

(57) **Zusammenfassung**

Die Erfindung betrifft einen Käsereifebehälter (1), der sich in einer Längsrichtung X, einer dazu orthogonalen Querrichtung Y und einer zu diesen beiden Richtungen wiederum orthogonalen Höhenrichtung Z erstreckt, mit zwei Längswänden (2), die sich in durch die Längsrichtung X und die Höhenrichtung Z aufgespannten Ebenen erstrecken, und mit zwei Querwänden (3), die sich in durch die Querrichtung Y und die Höhenrichtung Z aufgespannten Ebenen erstrecken, wobei die Längswände jeweils mit den Querwänden verbunden sind, und umgekehrt, dadurch gekennzeichnet, dass der Käsereifebehälter mindestens zwei Rahmenkonstruktionen (4) aufweist, die jeweils zwei Kantenschienen aufweisen, die die Längswände jeweils entlang ihrer in Längsrichtung X verlaufenden Kanten umschließen.

## Beschreibung

Die vorliegende Erfindung betrifft einen Käsereifebehälter nach Patentanspruch 1, der mit Hilfe einer geringen Anzahl von Schrauben zusammenbaubar - und somit auch wieder zerlegbar - ist.

Zum Reifen von Käse werden in der Regel sogenannte Käsereifebehälter verwendet, in denen der Käse eingeschweißt in Kunststofffolien in der Käselauge reift. Bisherige Käsereifebehälter bestehen in der Regel aus zwei Längs- und zwei Querwänden aus Holz oder Sperrholz, die in der Regel über übliche Metallschrauben für Holz miteinander verschraubt werden. Zur Stabilisierung des Behälters weisen die Längswände in der Regel noch eine Rahmenkonstruktion auf, die außen an die Längswand ebenso mit Hilfe von Metallschrauben angeschraubt wird. Im Laufe der Jahre kommt es jedoch zur Alterung der Metallschrauben, die noch dazu durch den Reinigungsprozess mit alkalischen Reinigungsmitteln und durch gelegentlich ausgelaufene Käselauge beschleunigt wird. Dadurch können die Schrauben abreißen, wodurch die Behälter an Stabilität verlieren. Dadurch ist dann das Bohrloch blockiert, so dass die Schrauben nicht auf einfache Weise nachgerüstet werden können. Zudem können Schraubenbestandteile in den Käse gelangen, was äußerst unerwünscht ist. Auch bedarf es für solche Behälter einer relativ langen Montagezeit, und sie sind auch für Reinigungszwecke nicht auf einfache Weise zerlegbar.

Es ist deshalb die Aufgabe der vorliegenden Erfindung, einen Käsereifebehälter bereitzustellen, der mit einer deutlich reduzierten Anzahl von Verbindungsschrauben zwischen den Längs- und den Querwänden auskommt sowie deutlich schneller montiert und für Reinigungszwecke auf einfache Weise zerlegt werden kann.

Die vorliegende Erfindung stellt hierfür einen Käsereifebehälter bereit, der sich in einer Längsrichtung X, einer dazu orthogonalen Querrichtung Y und einer zu diesen beiden Richtungen wiederum orthogonalen Höhenrichtung Z erstreckt. Der erfindungsgemäße Käsereifebehälter weist zwei Längswände auf, die sich in durch die Längsrichtung X und die Höhenrichtung Z aufgespannten Ebenen erstrecken. Weiterhin weist der erfindungsgemäße Käsereifebehälter zwei Querwände auf, die sich in durch die Querrichtung Y und die Höhenrichtung Z aufgespannten Ebenen erstrecken. Die Längswände sind jeweils mit den Querwänden verbunden, und umgekehrt. Der erfindungsgemäße Käsereifebehälter ist dadurch gekennzeichnet, dass er mindestens zwei Rahmenkonstruktionen aufweist, die jeweils zwei Kantenschienen aufweisen, die die Längswände jeweils entlang ihrer in Längsrichtung X verlaufenden Kanten umschließen. Dabei ist es bevorzugt, dass die Rahmenkonstruktionen an der Behälteraußenseite und die Längswände zur Behälterinnenseite angeordnet sind. Weiterhin bevorzugt ist es, dass die Rahmenkonstruktionen so ausgebildet sind, dass die Längswände entlang der Längsrichtung X in die Rahmenkonstruktionen eingeschoben sind. Dabei sind die Kantenschienen vorzugsweise in Form eines angeschweißten L-Profils ausgebildet, so dass die Kanten der Längswände U-förmig umschlossen werden können.

Da die Kanten der Längswände von der Rahmenkonstruktion mittels der Kantenschienen umschlossen werden, werden die Längswände stabil in der Rahmenkonstruktion gehalten. Zusätzlich können die Längswände aber auch in der Rahmenkonstruktion durch Verschrauben stabilisiert werden. Hierfür ist es bevorzugt, dass in die Längswand sogenannte Einschraubmuffen eigeschraubt werden, die ein Innengewinde für eine Schraube aufweisen. Durch Bohrungen in der Rahmenkonstruktion können die Schrauben dann in die Innengewinde der Einschraubmuffen geschraubt werden, wodurch die Rahmenkonstruktion mit der Längswand stabil verbunden wird. Die Verwendung von Einschraubmuffen hat den Vorteil, dass keine Teile von abgerissenen Schrauben in den Wänden steckenbleiben und Bohrlöcher blockieren können.

Die zwei Kantenschienen der Rahmenkonstruktion sind vorzugsweise durch mindestens zwei Höhenstreben miteinander verbunden, die sich in Höhenrichtung Z erstrecken. Dabei sind die mindestens zwei Höhenstreben vorzugsweise so ausgebildet, dass sie an die Querwände angeschraubt sind, d.h. die Höhenstreben erstrecken sich vorzugsweise parallel zu den Kanten der Längswände, die sich in Höhenrichtung Z erstrecken. Auf diese Weise werden die Kanten des Käsereifebehälters gut geschützt. Vorzugsweise sind die Höhenstreben in ihrem Querschnitt als L-Profil ausgebildet.

Es ist erfindungsgemäß bevorzugt, dass die Querwände in Höhenrichtung Z verlaufende Nuten zur Aufnahme der sich in Höhenrichtung Z erstreckenden Kanten der Längswände aufweisen. Auf diese Weise werden die Kanten der Längswände von den Querwänden umschlossen. So können die Längs- und die Querwände entlang ihrer Verbindungskanten nahezu spaltfrei miteinander verbunden werden.

Weiterhin ist es bevorzugt, dass die Nuten aufweisenden Querwände Überstände aufweisen, die über die Längswände in Querrichtung hinausragen, wobei die Überstände vorzugsweise so ausgebildet sind, dass sie mit den Höhenstreben verbunden sind. Dabei sind die Querwände mit den Höhenstreben vorzugsweise mittels in Nietmuttern einschraubbare Schrauben mit Innenantrieb verbunden, wobei sich die Nietmuttern vorzugsweise in den Höhenstreben befinden. Dabei weisen die Nietmuttern vorzugsweise Innengewinde auf. Die Schrauben werden dabei vorzugsweise durch die Querwände in die Innengewinde eingeschraubt.

Der erfindungsgemäße Käsereifebehälter ist vorzugsweise so ausgebildet, dass er eine gedachte Spiegelebene aufweist, die durch die Längsrichtung X und die Querrichtung Y aufgespannt wird. Das heißt, in anderen Worten ist der Käsereifebehälter auf der Oberseite und der Unterseite identisch. Auf diese Weise kann er sowohl von der einen als auch von der anderen Seite durch eine Platte abgedeckt werden. Zudem kann er dadurch auch gewendet werden.

Der erfindungsgemäße Käsereifebehälter kann somit eine rechteckig oder quadratisch ausgeführte Bodenplatte aufweisen, die sich in einer durch die Längsrichtung X und die Querrichtung Y aufgespannten Ebene erstreckt. Dabei wird die Bodenplatte vorzugsweise entlang ihrer Kanten von den Längswänden und den Querwänden umschlossen. Auf diese Weise kann ein nahezu spaltfreies Verbinden der Wände mit der Bodenplatte erreicht werden. Die Bodenplatte ist vorzugsweise auf einer Transportpalette angebracht. Zwischen der Bodenplatte und der Transportpalette ist vorzugsweise eine Wanne zum Verhindern des Auslaufens von Käselauge angeordnet. Dies ist insbesondere für den Fall vorgesehen, wenn eine der Folien reißt, in die der Käse eingeschweißt ist.

Die Rahmenkonstruktionen können eine oder mehrere zusätzliche Stützverstrebungen aufweisen, die sich entweder in Längsrichtung X oder Höhenrichtung Z erstrecken. Stützverstrebungen, die sich in Längsrichtung X erstrecken, verbinden vorzugsweise als Längsstreben zwei Höhenstreben miteinander. Stützverstrebungen, die sich in Höhenrichtung Z erstrecken, verbinden vorzugsweise als Höhenstreben die beiden Kantenschienen.

Weiterhin ist es bevorzugt, dass der erfindungsgemäße Käsereifebehälter Befestigungsvorrichtungen zum Befestigen der Rahmenkonstruktionen an der Transportpalette aufweist. Diese sind vorzugsweise als an der Transportpalette vorgesehene Hebel ausgebildet, die in Ösen an den Rahmenkonstruktionen eingreifen.

Die Innenwände des erfindungsgemäßen Käsereifebehälters sind vorzugsweise mit einem Harzfilm, vorzugsweise einem Phenolharzfilm, beschichtet. Insbesondere wird für die Längs- und die Querwände ein Sperrholz verwendet, bevorzugt ein phenolharzbeschichtetes Baufurniersperrholz, besonders bevorzugt eines der Klasse BFU 100, da dieses aufgrund der Verleimungsart als besonders wetterbeständig bzw. resistent gegen Feuchtigkeit gilt. Dabei soll die robuste Oberfläche verhindern, dass es im Gegensatz zu normalen Sperrhölzern nicht zu Absplitterungen kommt, die in Kontakt mit den Käselaiben kommen könnten und folglich im Schnittkäse mit negativen Folgen (Gefahr von Personenschäden beim Verzehr von Käse) landen könnten. Weiterhin wird dadurch eine gleitfähige Oberfläche gewährleistet, so dass der in Reifefolie verpackte Käse ohne Beschädigung der Reifefolie eingebracht werden kann. Auch weil der Käse während der Reife im Käsereifebehälter mehrfach auf Wendeanlagen gewendet werden muss, ist eine gleitfähige Innenoberfläche wichtig, um die Reifefolien nicht zu beschädigen. Die Glattheit der Oberfläche ist auch wichtig, da am Ende der Reife der Käsereifebehälter von der Grundpalette mit Hydraulikstempeln abgezogen werden muss. Außerdem kommt es je nach Käsesorte (zum Beispiel Lochkäse) aufgrund der Volumenzunahme bei der Reifung zu erhöhten Wanddrücken zwischen in Reifefolie verpacktem Käselaib und Käsereifebehälter. Auch aus diesem Grund ist eine Innenbeschichtung vorteilhaft. Wichtig bei allen Prozessschritten ist, dass zwischen Käselaib und Behälter möglichst wenig Reibung entsteht, die zur Zerstörung der Folie führen könnte. Weiterhin soll auch sichergestellt werden, dass möglichst wenig Migration von Stoffen von der Behälterwand durch die semipermeable Reifefolie in den Käse stattfinden kann. Der Nachweis zur Lebensmittelunbedenklichkeit solcher phenolharzfilmbeschichteter Platten wurde erbracht. Das Behältermaterial soll zudem beständig gegen maschinelle Reinigung mit Lauge sowie gegen bei der Reife austretende Flüssigkeit sein.

Weiterhin können durch die Querwände und/oder die Längswände Bohrungen vorgesehen sein, durch die aus der Reifefolie ausgetretene Käselauge aus dem Käsereifebehälter ablaufen kann.

Die vorliegende Erfindung soll nun anhand der folgenden Figuren genauer erläutert werden:
- Fig. 1: zeigt schematisch einen erfindungsgemäßen Käsereifebehälter in schräger Ansicht.
- Fig. 2A und Fig. 2B: zeigen jeweils eine Längswand mit Rahmenkonstruktion 2a, wobei die Längswand nur teilweise in die Rahmenkonstruktion eingeschoben ist.
- Fig. 3: zeigt eine Transportpalette mit Wanne und Bodenplatte 13a, wobei die Teile noch nicht vollständig zusammengesetzt sind.
- Fig. 4: zeigt schematisch, wie ein erfindungsgemäßer Käsereifebehälter nach Figur 1 aus den Längswänden und den Querwänden über die Rahmenkonstruktion zusammengesetzt wird.

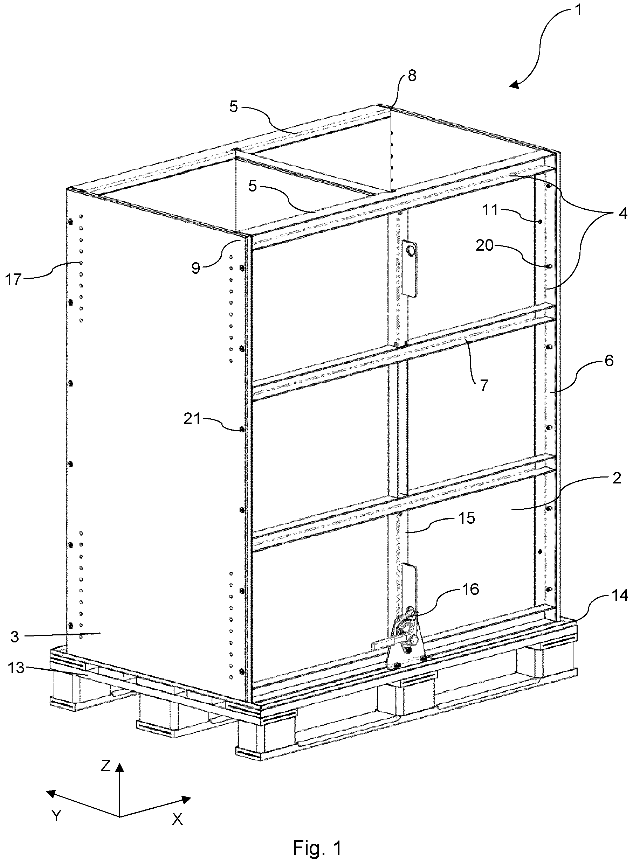

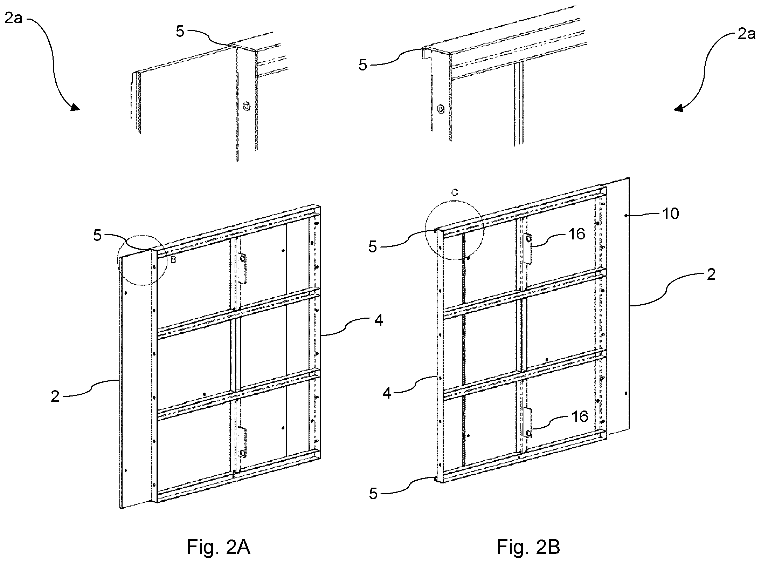

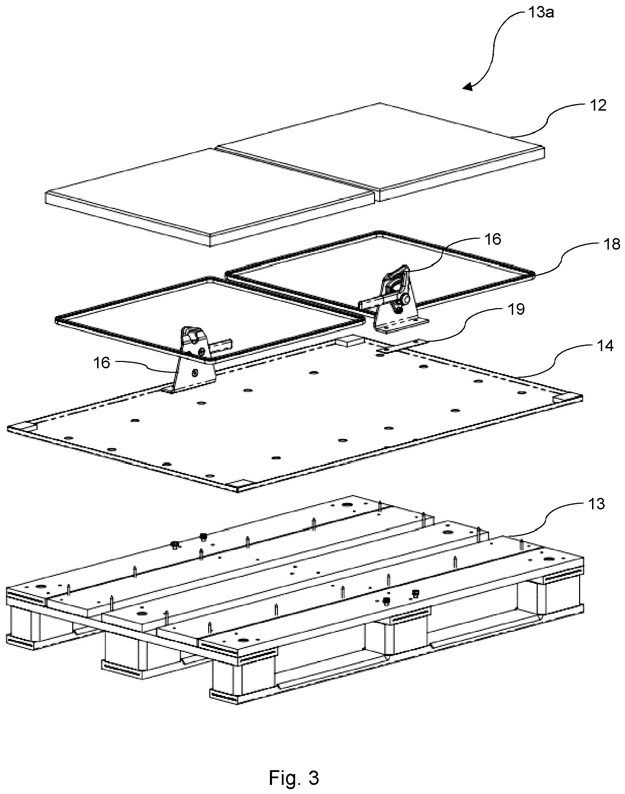

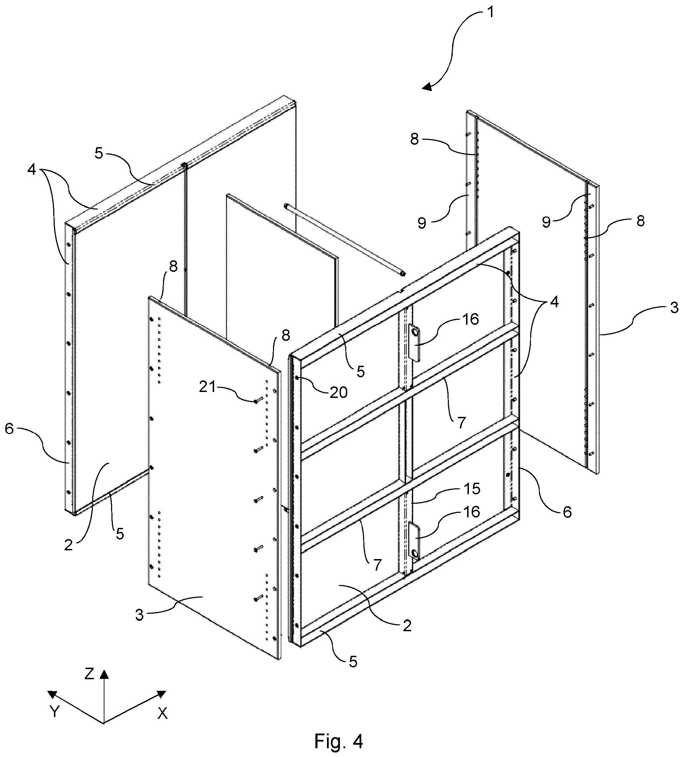

Figur 1 zeigt schematisch einen erfindungsgemäßen Käsereifebehälter 1 in schräger Ansicht. Der erfindungsgemäße Käsereifebehälter 1 weist zwei Längswände 2 auf, die sich in durch die Längsrichtung X und die Höhenrichtung Z aufgespannten Ebenen erstrecken. Weiterhin weist der erfindungsgemäße Käsereifebehälter 1 zwei Querwände 3 auf, die sich in durch die Querrichtung Y und die Höhenrichtung Z aufgespannten Ebenen erstrecken. Die Längs- 2 und die Querwände 3 sind im Bereich ihrer in Höhenrichtung Z verlaufenden Kanten miteinander verbunden. Die Längswände 2 weisen jeweils eine Rahmenkonstruktion 4 auf. Die Rahmenkonstruktionen 4 sind vorzugsweise an den Außenseiten des Käsereifebehälters 1 angeordnet. Die Rahmenkonstruktionen 4 weisen jeweils zwei Kantenschienen 5 auf, die vorzugsweise an der oberen und der unteren Kante, d.h. in Längsrichtung X verlaufen. Die Kantenschienen 5 sind vorzugsweise so beschaffen, dass sie die Längswände 2 jeweils entlang ihrer in Längsrichtung X verlaufenden Kanten umschließen. In anderen Worten sind die Kantenschienen 5 so beschaffen, dass die Längswände 2 in Längsrichtung X in die Rahmenkonstruktionen 4 eingeschoben werden können. Letzteres wird aus den Figuren 2A und 2B ersichtlich, die jeweils eine Längswand 2 mit Rahmenkonstruktion 4 zeigen, wobei die Längswand 2 noch nicht vollständig in die Rahmenkonstruktion 4 eingeschoben ist. Die Kantenschienen 5 sind vorzugsweise so beschaffen, dass sie die Kanten der Längswände 2 U-förmig umgeben. Die Rahmenkonstruktion 4 weist vorzugsweise entlang ihrer Kanten in Höhenrichtung Z Höhenstreben 6 auf. Die Höhenstreben 6 weisen vorzugsweise ein L-Profil auf, so dass an einer Seite des L-Profils die Längswand 2 und an der anderen Seite des L-Profils die Querwand 3 angeordnet werden kann. Befestigt werden die Längswände 2 an den Höhenstreben 6, indem Einschraubmuffen 10 mit Innengewinden in die Längswände 2 eingeschraubt werden. Durch Löcher in den Höhenstreben 6 können dann Schrauben 11 in die Innengewinde der Einschraubmuffen 10 geschraubt werden, wobei die Längswände 2 an der Rahmenkonstruktion 4 fixiert werden. Befestigt werden die Querwände 3 an den Höhenstreben 6, indem Nietmuttern 20 mit Innengewinden in die Höhenstreben 6 eingezogen werden. Durch Löcher in den Querwänden 3 können dann Schrauben 21 mit Innenantrieb in die Innengewinde der Nietmuttern 20 geschraubt werden, wobei die Querwände 3 an den Rahmenkonstruktionen 4 fixiert werden. Auf diese Weise werden die Längswände 2 mit den Querwänden 3 über die Rahmenkonstruktion 4 miteinander verbunden. Weiterhin ist es bevorzugt, dass die Querwände 3 Nuten 8 aufweisen, die in Höhenrichtung Z verlaufen. Diese Nuten 8 sind aus Figur 4 ersichtlich und haben den Zweck, dass darin die in Höhenrichtung Z verlaufenden Kanten der Längswände 2 aufgenommen werden können. Die Querwände 3 weisen vorzugsweise neben den Nuten 8 Überstände 9 auf, die in Querrichtung Y über die Kanten der Längswände 2 hinausragen. An diesen Überständen 9 werden vorzugsweise die Höhenstreben 6 befestigt. Die Höhenstreben 6 sind an den Ecken der Rahmenkonstruktion 4 mit den Kantenschienen 5 verbunden. Zur weiteren Stabilisierung der Rahmenkonstruktion 4 weist diese vorzugsweise ein oder mehrere Längsstreben 7 auf, die in Längsrichtung X verlaufen und vorzugsweise mit den Höhenstreben 6 verbunden sind. Weiterhin kann die Rahmenkonstruktion 4 auch noch eine weitere Stützverstrebung 15 als weitere Höhenstrebe aufweisen, die in Höhenrichtung Z verläuft und die Kantenschienen 5 mittig miteinander verbindet. Die Stützverstrebung 15 weist vorzugsweise im Bereich des oberen und des unteren Endes eine Befestigungsvorrichtung 16 (hier in Form einer Öse) auf. Diese Befestigungsvorrichtungen 16 dienen dazu, dass der Käsereifebehälter 1 sowohl an seiner Oberseite als auch an seiner Unterseite mit einer Transportpalette 13 verbunden werden kann, wobei vorzugsweise die Befestigung darüber erfolgt, dass Rahmenkonstruktion 4 und Transportpalette 13 zueinander komplementäre Befestigungsvorrichtungen 16 aufweisen, die vorzugsweise in Form von Hebeln vorliegen, die in Ösen eingreifen können. Auf der Transportpalette 13 befindet sich vorzugsweise eine mit der Transportpalette 13 befestigte Wanne 14, in der aus dem Käsereifebehälter 1 ausgelaufene Käselauge aufgefangen werden kann. Damit Käselauge aus dem Behälter 1 auslaufen kann, sind vorzugsweise in der Querwand 3 Bohrungen 17 vorgesehen. Auf der Wanne 14 sind eine oder mehrere Bodenplatten 12 (hier zwei Bodenplatten) angebracht, die von den Längs- 2 und Querwänden 3 umgeben werden, wodurch eine relativ spaltfreie Verbindung zwischen den Wänden 2 und 3 und der/den Bodenplatten 12 gewährleistet werden kann. Der Aufbau von Transportpalette 13, Wanne 14 und Bodenplatten 13 ist schematisch in Figur 3 gezeigt. Um das Auslaufen von Käselauge aus der Wanne 14 zu verhindern, ist eine die Bodenplatten 13 umlaufende Dichtung 18 vorgesehen. Aus dem gleichen Grund ist zwischen der Befestigungsvorrichtung 16 und der Wanne 14 ebenso eine Befestigungsvorrichtungsdichtung 19 vorgesehen, die vorzugsweise aus EPDM ist. Die Wanne 14 ist vorzugsweise eine rostfreie Edelstahlwanne. Die genannten Komponenten werden von unten nach oben mit Schrauben mit der Transportpalette verbunden.

Wie in den Figuren gezeigt, kann der erfindungsgemäße Käsereifebehälter 1 auch durch eine oder mehrere Trennwände in zwei oder mehr Kammern (hier zwei) unterteilt sein. Diese Trennwand wird vorzugsweise über in den Längswänden 2 befindliche Nuten eingeschoben, die in Höhenrichtung Z verlaufen.

Figur 4 zeigt schematisch, wie ein erfindungsgemäßer Käsereifebehälter 1 gemäß Figur 1 aus den Längswänden 2 und den Querwänden 3 über die Rahmenkonstruktion 4 zusammengesetzt wird.

### Liste der Bezugszeichen:

- 1: Käsereifebehälter
- 2: Längswand
- 2a: Längswand mit Rahmenkonstruktion
- 3: Querwand
- 4: Rahmenkonstruktion
- 5: Kantenschienen
- 6: Höhenstreben
- 7: Längsstreben
- 8: Nuten der Querwände
- 9: Überstand
- 10: Einschraubmuffe
- 11: Schraube
- 12: Bodenplatte
- 13: Transportpalette
- 13a: Transportpalette mit Wanne und Bodenplatte
- 14: Wanne
- 15: Stützverstrebung als Höhenstrebe
- 16: Befestigungsvorrichtung
- 17: Bohrungen
- 18: umlaufende Dichtung
- 19: Befestigungsvorrichtungsdichtung
- 20: Nietmutter mit Innengewinde
- 21: Schrauben mit Innenantrieb
- X: Längsrichtung
- Y: Querrichtung
- Z: Höhenrichtung

## Patentansprüche

1. Käsereifebehälter (1), der sich in einer Längsrichtung X, einer dazu orthogonalen Querrichtung Y und einer zu diesen beiden Richtungen wiederum orthogonalen Höhenrichtung Z erstreckt,
(a) mit zwei Längswänden (2), die sich in durch die Längsrichtung X und die Höhenrichtung Z aufgespannten Ebenen erstrecken, und
(b) mit zwei Querwänden (3), die sich in durch die Querrichtung Y und die Höhenrichtung Z aufgespannten Ebenen erstrecken,
(c) wobei die Längswände (2) jeweils mit den Querwänden (3) verbunden sind, und umgekehrt,
**dadurch gekennzeichnet, dass**
(d) der Käsereifebehälter mindestens zwei Rahmenkonstruktionen (4) aufweist, die jeweils zwei Kantenschienen (5) aufweisen, die die Längswände (2) jeweils entlang ihrer in Längsrichtung X verlaufenden Kanten umschließen.

2. Käsereifebehälter (1) nach Anspruch 1, wobei die Rahmenkonstruktionen (4) so ausgebildet sind, dass die Längswände (2) entlang der Längsrichtung X in die Rahmenkonstruktionen (4) eingeschoben sind.

3. Käsereifebehälter nach Anspruch 1 oder 2, wobei zwei Kantenschienen (5) einer Rahmenkonstruktion (4) durch mindestens zwei Höhenstreben (6) miteinander verbunden sind, die sich in Höhenrichtung Z erstrecken.

4. Käsereifebehälter nach einem der Ansprüche 1 bis 3, wobei die mindestens zwei Höhenstreben (6) so ausgebildet sind, dass die Höhenstreben (6) an die Querwände (3) angeschraubt sind, d.h. die Höhenstreben (6) erstrecken sich parallel zu den Kanten der Längswände (2), die sich in Höhenrichtung Z erstrecken.

5. Käsereifebehälter (1) nach einem der Ansprüche 1 bis 4, wobei die Querwände (3) in Höhenrichtung Z verlaufende Nuten (8) zur Aufnahme der sich in Höhenrichtung Z erstreckenden Kanten der Längswände (3) aufweisen.

6. Käsereifebehälter (1) nach Anspruch 5, wobei die die Nuten (8) aufweisenden Querwände (3) Überstände (9) aufweisen, die über die Längswände (2) in Querrichtung Y hinausragen, wobei die Überstände (9) so ausgebildet sind, dass sie mit den Höhenstreben (6) verbunden sind.

7. Käsereifebehälter (1) nach einem der Ansprüche 4 bis 6, wobei die Querwände (3) an den Höhenstreben (6) befestigt sind, indem Nietmuttern (20) mit Innengewinden in die Höhenstreben (6) eingezogen sind, wobei durch Löcher in den Querwänden (3) Schrauben (21) mit Innenantrieb in die Innengewinde der Nietmuttern (20) geschraubt sind.

8. Käsereifebehälter (1) nach einem der Ansprüche 1 bis 7, der so ausgebildet ist, dass er eine gedachte Spiegelebene aufweist, die durch die Längsrichtung X und die Querrichtung Y aufgespannt wird.

9. Käsereifebehälter (1) nach einem der Ansprüche 1 bis 7, der eine rechteckig oder quadratisch ausgeführte Bodenplatte (12) aufweist, die sich in einer durch die Längsrichtung X und die Querrichtung Y aufgespannten Ebene erstreckt, wobei die Bodenplatte (12) entlang ihrer Kanten von den Längswänden (2) und den Querwänden (3) umschlossen wird.

10. Käsereifebehälter (1) nach Anspruch 9, wobei die Bodenplatte (12) auf einer Transportpalette (13) angebracht ist.

11. Käsereifebehälter (1) nach Anspruch 10, wobei zwischen der Bodenplatte (12) und der Transportpalette (13) eine Wanne (14) zum Verhindern des Auslaufens von Käselauge angeordnet ist.

12. Käsereifebehälter (1) nach einem der Ansprüche 1 bis 11, wobei die Rahmenkonstruktionen (4) mindestens eine zusätzliche Stützverstrebung (15) aufweisen, die sich entweder in Längsrichtung X oder Höhenrichtung Z erstrecken.

13. Käsereifebehälter nach Anspruch 10 oder 11, der Befestigungsvorrichtungen (16) zum Befestigen der Rahmenkonstruktionen (4) an der Transportpalette (13) aufweist.

14. Käsereifebehälter (1) nach einem der Ansprüche 1 bis 13, wobei die Querwände (3) und/oder die Längswände (2) Bohrungen (17) zum Auslaufen von Käselauge aus dem Käsereifebehälter (1) aufweisen.
